(19)

Europäisches
Patentamt
European
Patent Office
Office européen
des brevets

(11) **EP 3 155 359 B1**

(12) **EUROPEAN PATENT SPECIFICATION**

(45) Date of publication and mention
of the grant of the patent:
**18.07.2018 Bulletin 2018/29**

(21) Application number: **15730450.2**

(22) Date of filing: **15.06.2015**

(51) Int Cl.:
***F41H 5/04*** *(2006.01)*

(86) International application number:
**PCT/EP2015/063270**

(87) International publication number:
**WO 2015/193215 (23.12.2015 Gazette 2015/51)**

(54) **FIBROUS TAPE**

FASERBAND

BANDE FIBREUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2014 EP 14172525**

(43) Date of publication of application:
**19.04.2017 Bulletin 2017/16**

(73) Proprietor: **DSM IP Assets B.V.**
**6411 TE Heerlen (NL)**

(72) Inventors:
• **VAN PUTTEN, Koen**
**NL-6100 AA Echt (NL)**
• **CALAZANS-BEHN, Marina**
**NL-6100 AA Echt (NL)**
• **MARISSEN, Roelof**
**NL-6100 AA Echt (NL)**
• **VERSPAGEN, Antoon Maria**
**NL-6100 AA Echt (NL)**
• **WEBER, Christa**
**NL-6100 AA Echt (NL)**
• **STEEMAN, Reinard Jozef Maria**
**NL-6100 AA Echt (NL)**

(74) Representative: **DSM Intellectual Property**
**P.O. Box 4**
**6100 AA Echt (NL)**

(56) References cited:
**WO-A1-2009/056286          WO-A1-2012/080274
WO-A1-2013/131996          GB-A- 2 253 420**

**Description**

The invention relates to a fibrous tape made from fibers comprising highly oriented polymer, the tape having a tenacity of at least 1.2 N/tex and an areal density of between 5 and 250 $g/m^2$. The invention further relates to a process to manufacture said fibrous tape from said fibers comprising highly oriented polymer.

Such tape is known from WO2013/131996. WO2013/131996 discloses a fibrous tape having a tenacity of at 3.54 N/tex and an areal density of about 35 $g/m^2$ made from a plurality of fused high tenacity UHMWPE filaments. The tape disclosed in WO2013/131996 is further in contact with a plastomer layer at an areal density of between 0.2 and 15 $g/m^2$.

Although the tapes according to WO2013/131996 show satisfactory strength and performance in applications such as antiballistic panels, they show a deficiency during handling of the tapes and/or the sheets comprising the tapes which is expressed by the occurrence of defects in the tape due to unwanted splitting of the tape. Furthermore, the performance of the tape in ballistic applications can be further improved.

The object of the present invention is to provide a fibrous tape with optimized handling properties resulting in less defects of the tape through splitting. A further objective of the invention may be to provide a tape with improved antiballistic performance.

This objective is achieved according to the invention by providing a tape with a transversal strength of at least 0.5 MPa. It was observed that tapes with such improved transversal strength may provide improved handling properties. It appeared that tapes according to the invention can be handled more easily and may be processed into antiballistic sheets and antiballistic panels with substantially less defects. It was further observed, that the tapes according to the invention may provide antiballistic sheets and panels with optimized antiballistic performance.

Fibrous tapes are also known from other patent applications such as WO2012/080274 and WO2013/130160. Also the therein disclosed fibrous tapes have high tenacity but also present the above described deficiencies.

By the term "fibrous tape" is herein understood a tape obtained by a process wherein fibers comprising polymer are used as a precursor material. A fibrous tape is structurally different from a non-fibrous tape, which is usually obtained by compressing polymeric powders or spinning solutions or melts of polymers. The cross-section of a fibrous tape according to the invention, if observed with a microscope, possesses boundaries between the fibers forming the tape. The observable boundaries of the precursor fibers may be recognized as substantially straight limits between the precursor fibers in the fibrous tape, which precursor fibers may possess a mainly polygonal cross-section, for examples a hexagonal, pentagonal or rectangular cross-section.

The fibrous tape comprises abutting polymeric fibers having a fiber length, wherein the abutting fibers may be fused to each other over an abutting length. Preferably a plurality of fibers, i.e. more than one fiber, is used to make such tape, the plurality of fibers may be provided by a single or more than one yarn comprising the fibers. Preferably, the abutting length is at least 50% of the fibers' length, more preferably at least 70%, most preferably at least 90%. More preferably, the abutting length of the polymeric fibers is about the same with the fibers' length. The abutting length over which abutting polymeric fibers may be fused to each other is a measure of the degree of fibers' fusion. The degree of fibers' fusion may be adjusted as it will be detailed hereinafter and the abutting length may be measured with a microscope preferably provided with an adjustable depth of field and/or with a contrast enhancer device. The difference between two, at least partially, fused fibers and two non-fused fibers is that the fused fibers are hindered in moving one in respect to each other over the fused part which keeps the fibers in contact. Accordingly a fibrous tape in the context of the present invention is structurally different from the monolayers known in the art comprising fibers and an elastic resin or a polymeric matrix that encapsulate and holds the fibers together. In contrast to said monolayers known in the art, the fibers of the present tapes are essentially held together by the above described interaction of abutting fibers. The present fibrous tapes are substantially devoid of resins or adhesives located in between the fibers forming the tape. Preferably the fibrous tapes are substantially devoid of resins or adhesives. By substantially devoid is understood that the fibrous tapes comprise less than 5 wt%, preferably less than 3 wt%, more preferably less than 2wt% and most preferably less than 1 wt% of resin or adhesive.

By tape is herein understood an elongated body having a longitudinal direction, a width, a thickness and a cross-sectional aspect ratio, i.e. the ratio of thickness to width. Said cross-section is defined as substantially perpendicular to the longitudinal direction of the tape. The longitudinal direction or machine direction of the tape essentially corresponds to the orientation of the fused fibers. The length dimension of a tape of the invention is not particularly limited. The length may exceed 10km and mainly depends on the polymeric fibres and the process used to produce the tape. Nevertheless said tape can for convenience reasons be manufactured to smaller sizes, according to the requirements of the envisioned applications.

In a preferred embodiment, the tape of the invention has an average cross-sectional aspect ratio (thickness : width) of at most 1:50, preferably at most 1:100, more preferably at most 1:500, even more preferably at most 1:1000. The width of the fibrous tape is preferably between 2 mm and 3000 mm, more preferable between 10 mm and 2500 mm, even more preferably between 20 mm and 2000 mm, yet even more preferably between 50 mm and 1800 mm and most preferably between 80 mm and 1600 mm. The fibrous tape preferably has a thickness of between 1 μm and 200 μm, more preferably of between 3 μm and 120 μm, even more preferably of between 5 μm and 100 μm, even more preferably of between 8 μm and 80 μm and most preferably of between 10 μm and 50 μm. By width is herein understood the largest dimension between two points on the perimeter of a cross-section of the tape, said cross-section being orthogonal to the length of the tape. By thickness is herein understood a distance between two points on the perimeter of said cross-section, said distance being perpendicular on the width of the tape. The width and the thickness of a tape can be measured according to known methods in the art, e.g. with the help of a ruler and a microscope or a micrometer, respectively. It was observed that in contrast to the tapes of the prior art, the tapes according to the invention can be produced within above preferred widths and thicknesses while a low amount of defects of the tapes once processed into antiballistic articles is maintained.

By fiber is herein understood an elongated body having a length much greater than its transverse dimensions. A fiber may have a regular rounded cross-section, e.g. oval or circular; or an irregular cross-section, e.g. lobed, C-shaped or U-shaped. The fibers may have continuous lengths, known in the art as filaments, or discontinuous lengths, known in the art as staple fibers. Staple fibers are commonly obtained by cutting or stretch-breaking filaments. A yarn for the purpose of the invention is an elongated body containing many fibers. The fiber has a cross sectional aspect ratio, i.e. the ratio of the largest dimension between two points on the perimeter of a cross-section of the fiber to the lowest dimension between two points on the same perimeter. Preferably the cross-sectional aspect ratio of the fiber is at most 10:1, more preferably of at most 5:1 and even more preferably 3:1.

Examples of fibers of polymer suitable for the present invention include but are not limited to fibers manufactured from polyamides and polyaramides, e.g. poly(p-phenyleneterephthalamide) (known as Kevlar®); poly(tetrafluoroethylene) (PTFE); poly{2,6-diimidazo-[4,5b-4',5'e]pyridinylene-1,4(2,5-dihydroxy)phenylene} (known as M5); poly(p-phenylene-2, 6-benzobisoxazole) (PBO) (known as Zylon®); poly(hexamethyleneadipamide) (known as nylon 6,6), poly(4-aminobutyric acid) (known as nylon 6); polyesters, e.g. poly(ethylene terephthalate), poly(butyleneterephthalate), and poly(1,4 cyclohexylidenedimethyleneterephthalate); polyvinyl alcohols; thermotropic liquid crystal polymers (LCP) as known from e.g. US 4,384,016; polyolefins e.g. homopolymers and copolymers of polyethylene and/or polypropylene; and combinations thereof.

Good results may be obtained when the polymer is a polyolefin, preferably a polyethylene. Preferred polyethylenes are high or ultrahigh molecular weight polyethylene (UHMWPE). Polyethylene fibers may be manufactured by any technique known in the art, preferably by a melt or a gel spinning process. Most preferred fibers are gel spun UHMWPE fibers, e.g. those sold by DSM Dyneema, NL trademarked as Dyneema®. If a melt spinning process is used, the polyethylene starting material used for manufacturing thereof is preferably a high molecular weight polyethylene with a weight-average molecular weight between 20,000 and 600,000 g/mol, more preferably between 60,000 and 200,000 g/mol. An example of a melt spinning process is disclosed in EP 1,350,868 incorporated herein by reference. If the gel spinning process is used to manufacture said fibers, preferably an UHMWPE is used with an intrinsic viscosity (IV) of preferably at least 5 dL/g, more preferably at least 8 dL/g, most preferably at least 12 dL/g. Preferably the IV is at most 40 dL/g, more preferably at most 30 dL/g, more preferably at most 25 dL/g. Preferably, the UHMWPE has less than 1 side chain per 100 C atoms, more preferably less than 1 side chain per 300 C atoms. Preferably the UHMWPE fibers are manufactured according to a gel spinning process as described in numerous publications, including US 4413110, GB 2042414 A, GB-A-2051667, WO 01/73173 A1.

The tenacity or tensile strength of the polymeric fibers is preferably at least 1.2 N/tex, more preferably at least 2.5 N/tex, most preferably at least 3.5 N/tex. Best results were obtained when the fibers of polymer were UHMWPE fibers having a tenacity of at least 2 N/tex, more preferably at least 3 N/tex.

The tenacity of the tape of the invention is preferably at least 1.5 N/tex, preferably at least 2.0 N/tex, more preferably at least 2.5 N/tex, even more preferably at least 3.0 N/tex and most preferably at least 3.5 N/tex. It was observed that tapes with increased tenacity, sheets and panels with further improved ballistic properties can be obtained.

The fibrous tape of the invention has a transversal strength of at least 0.5 MPa. Achieving such transversal strength came as a surprise for the inventors as it is known in the art that increased transversal strength of tapes usually come to the expense of other mechanical properties such as tenacity. It is considered to be an achievement of the inventors to have identified a process allowing for the first time to produce fibrous tapes with transversal strength exceeding 0.5 MPa while substantially maintaining the tenacities of the employed fibers. Preferably the transversal strength of the tape of the invention is at least 0.6 MPa, more preferably at least 0.7 MPa, even more preferably at least 0.8 MPa and most preferably at least 0.9 MPa. It was observed that increasing the transversal strength to such preferred levels further improved the handling properties of the tapes and may further reduced the amount of defects in the antiballistic articles made thereof. By transversal strength of a fibrous tape in the context of the present invention is meant the force, in Newton (N), required to rupture a tape along a cross-sectional area perpendicular to its width direction divided by the surface (in $mm^2$) of said cross-sectional area. Said transversal strength is thus expressed in MPa or alternatively in $N/mm^2$. Further details as to the measurement of the transversal strength can be found in the Methods of Measuring.

It has further been found that the balance between transversal strength and tenacity could be further improved if the fibers from which the tape according to the invention are produced contain between 10 ppm and 1 wt% of a solvent for the polymer from which the fibers are made, wherein the weight percentage is expressed as weight solvent per total weight of the fiber. Accordingly a preferred embodiment of the tapes of the present invention is that the fibers comprising polymer from which the tapes have been made comprise at least 10 ppm, preferably 20 ppm most preferably 50 ppm of a solvent for the polymer. Contents higher than 1 wt% no longer essentially contribute to the improvement, or even impair the transversal strength. For the above reasons, the solvent content in the fibre is preferably from 10 ppm to 1 wt%, more preferably 20 ppm to 0.5 wt%, even more preferably between 50 ppm to 0.1 wt%, and most preferably between 0.01 wt% to 0.1 wt%.

Solvent is here understood to be a substance that is capable of dissolving the polymer in question. Suitable solvents for polymers are known to one skilled in the art. They can, for example, be chosen from the 'Polymer Handbook' by J. Brandrup and E.H. Immergut, third edition, chapter VII, pages 379 - 402. Examples of suitable solvents for polyolefins, in particular for polyethylene, are, separately or in combination: decalin, tetralin, toluene, lower n-alkanes such as hexane, (para-)xylene, paraffin oil, squalane, mineral oil, paraffin wax, cyclooctane. For the reasons cited above, the solvent is most preferably paraffin oil, paraffin wax or decalin.

Preferably, the solvent is a high boiling solvent, such as paraffin oil. It was observed that such solvents provide fibrous tapes with further improved transversal strength. Preferably, these are solvents having a boiling temperature that is substantially higher, preferably at least 50 K, more preferably at least 100 K higher, than the melting temperature of the polymer. The melting temperature of the fibers can be determined by DSC using a methodology as described at pg. 13 of WO 2009/056286.

The presence of the solvent in the fiber may have multiple origins. For example the solvent present in the fibre may be a remainder of solvent used during the spinning process of the fibre or it may have been purposely added before, during or after the spinning process of the fibre or the manufacturing of the fibrous tape.

In the context of the present invention fibres of highly oriented polymer is defined as that the polymer chains run substantially parallel with the direction of fiber. It is preferred for the degree of orientation F to be at least 0.95, more preferably at least 0.97 and even more preferably at least 0.98. The degree of orientation is defined by the formula $F = (90° - H°/2)90°$, where $H°$ is the width at half the height of the scattering intensity along the Debye ring of the strongest reflection on the equator.

The fibrous tape, or the therefrom produced sheets and/or the antiballistic articles of the invention may also comprise a binder or a matrix material. Said binder or matrix material may be present in between the polymeric fibers or in between the fibrous tapes. Various binders or matrices may be used, examples thereof including thermosetting and thermoplastic materials. A wide variety of thermosetting materials are available, however, epoxy resins or polyester resins are most common. Suitable thermosetting and thermoplastic materials are enumerated in, for example, WO 91/12136 A1 (pages 15-21) included herein by reference. From the group of thermosetting materials, vinyl esters, unsaturated polyesters, epoxides or phenol resins are preferred. From the group of thermoplastic materials, polyurethanes, polyvinyls, polyacrylics, polybutyleneterephthalate (PBT), polyolefins or thermoplastic elastomeric block copolymers such as polyisopropene-polyethylene-butylene-polystyrene or polystyrene-polyisoprene-polystyrene block copolymers are preferred.

More preferred, however, is that the fibrous tape is substantially free of any binder or matrix material between the polymeric fibers. It was observed that in the absence of binders or matrix materials, the ballistic properties of the material of the invention may be improved.

Yet in a preferred embodiment, the binder or matrix material is present on and in between the fibrous tapes as for example disclosed in WO2013/131996, especially on pages 9, 11 and 12, included herein by reference.

The invention further relates to a process for the manufacturing of the tapes of the invention, comprising the steps of:

(a) providing fibers comprising highly a oriented polymer, said fibers having a tenacity of at least 1.2 N/tex;
(b) forming a layer comprising the fibers;
(c) applying a longitudinal tensile force to the fibers in the layer,
(d) stretching the fiber layer at a draw ratio of at least 1.01 to form a stretched layer;
(e) providing the stretched layer at a processing temperature $T_p$ to compression means;
(f) compressing the stretched layer of fibers by subjecting the layer to a compression by the compression means, the compression means having a temperature $T_c$, to form a fibrous tape;
(g) optionally stretching the fibrous tape by a draw rate of at most 1.1 and,
(h) cooling the fibrous tape to a temperature of at most 80°C under a tension sufficient to prevent loss of mechanical properties;

wherein $T_m$ is the melting temperature of the polymer, wherein $T_m > T_p \geq T_m - 30$ K, and wherein $T_c \leq T_p - 3$ K.

It was observed that with the process of the invention, a tape having increased transversal strength as compared with known fibrous tapes may be obtained.

It was further observed that the mechanical properties of the fibrous tape made according to the process according to the invention are similar to the mechanical properties of the fibers utilized to manufacture the tape thereof. This came also as a surprise since hitherto the mechanical properties of tapes manufactured from polymeric fibers were usually much lower than those of the polymeric fibers. Accordingly the present invention also relates to a fibrous tape obtainable by the process of the invention. Preferably the fibrous tape obtainable by the process of the invention has a tenacity which is at most 20% lower than the tenacity of the polymeric fibers used to manufacture said fibrous tape, more preferably at most 10%, most preferably with at most 5% lower tenacity than the polymeric fibers used to manufacture the fibrous tape. If polymeric fibers with various tenacities and moduli are used to manufacture the tape of the invention, the tenacity or modulus of the polymeric fibers to be considered are an average tenacity and modulus of the various polymeric fibers.

Preferably, at step (a) of the process of the invention, the plurality of highly oriented polymer fibers is provided as at least one yarn, more preferably more than one yarn, that may be twisted or untwisted. Preferably the yarns have a twist of less than 1 per 100 cm yarn, more preferably less than 1 twist per 200 cm yarn and even more preferably less than 1 twist per 400 cm. Most preferably the yarns are substantially untwisted. In case a twisted yarn is provided to the process, the skilled person will be aware of means to remove the twist from the provided yarns before or during the formation into a layer comprising the fibers, step (b).

According to the process of the invention, at step (b) the polymeric fibers are formed into a layer comprising the fibers, preferably a layer of fibers. Said layer may be fibers arranged in configurations of various types which may comprise random or ordered oriented fibers such as arranged in parallel arrays. Most preferred the layer of fibers is an unidirectional network wherein a majority of fibers, e.g. at least 50 mass%, more preferably at least 75 mass%, even more preferably at least 95 mass %, most preferably about 100 mass% of the total mass of fibers forming the layer, is arranged to run substantially in parallel along a common direction. The unidirectional alignment of polymeric fibers may be achieved through various standard techniques known in the art that are able to produce substantially straight rows of unidirectionally aligned fibers, such that adjacent fibers overlap and preferably there is substantially no gap between them. An example of such a technique is described in WO 2009/0056286 included herein by reference, wherein a layer comprising abutting and unidirectionally aligned polymeric fibers may suitably be formed by feeding a polymer fiber from an unwinding station under tension, through an alignment means, e.g. a reel followed by a plurality of spreader bars. It was observed that such substantial parallel alignment of the fibers in the layer provides tapes with further improved transversal strength.

The thickness of the layer comprising the polymeric fibers is preferably chosen to yield after the stretching of steps (d) and compression step (f) the desired thickness of the tape. The layer may have a minimum thickness of about the diameter of the fibers. Preferably the thickness of the layer will be at least twice the thickness of the fibers.

Preferably, the process of the invention comprises an additional step (b1) wherein the fibers are preheated to a temperature below $T_m$, before or while stretching the layer in step (d). Preheating of the layer may be carried out by keeping the layer for a dwell time in an oven set at a preheating temperature, subjecting the layer to heat radiation or contacting the layer with a heating medium such as a heating fluid or a heated surface. Preferably, the preheating temperature is between $T_m$ - 2 K and $T_m$ - 30 K, more preferably between $T_m$ - 3 K and $T_m$ - 20 K, most preferably between $T_m$ - 5 K and $T_m$ - 15 K. The dwell time is preferably between 2 and 100 seconds, more preferably between 3 and 60 seconds, most preferably between 4 and 30 seconds.

During the process of the invention, in step (d) the layer is stretched at a draw ratio of at least 1.01. More preferably the draw ratio is at least 1.03, even more preferably at least 1.05 and most preferably at least 1.08. The maximum draw rate that may be applied on the layer may essentially be limited by the drawability of the fibers employed in the process. Nevertheless it was observed that too high draw rates applied to the layer before the compaction step (f) may result in unwanted deficiencies of the produced tapes, such as fibrillation or splitting of the tapes during or after the processing of the fibrous tape. Accordingly, the stretching in step (d) is preferably limited to a draw ratio of less than 2.0, preferably less than 1.8, more preferably less than 1.5 and most preferred less than 1.3. In a yet preferred embodiment the draw ratio of the layer may be between 1.01 and 2.0, preferably between 1.03 and 1.8, more preferably between 1.05 and 1.5 and most preferably between 1.08 and 1.3. It was observed that at such limited draw ratio fibrous tapes having further improved properties may be obtained.

In an alternative process of the invention, the process may form an integral part of the manufacturing process of high tenacity fibers and wherein the stretching step (b) is the last stretching step of the drawing operation to which the fibers are subjected. Depending on the number of drawing steps and the respective drawing ratios in said drawing steps the draw ratio of step (d) may be between 2.0 and 10, preferably between 2.5 and 9.0, more preferably between 3.0 and 8.0, and most preferably between 4.0 and 7.0. It was observed that combination of the drawing step (d) with the production of high tenacity fibers has a substantial efficiency advantage while the transversal strength of the produced tape remains substantially unaffected.

In step (e) the layer is provided at a temperature $T_p$ to compression means. The temperature $T_p$ may be achieved by heating or cooling the layer with means known to the skilled person. Preferably the temperature $T_p$ is between $T_m$ - 1 K and $T_m$ - 30 K, more preferably between $T_m$ - 1 K and $T_m$ - 15 K, most preferably between $T_m$ - 1 K and $T_m$ - 5 K.

At step (f) of the process of the invention, the layer comprising the polymeric fibers is compressed by the compression means. Preferably the compression means may be a calender, a smoothing unit, a double belt press, an alternating press. The compression means form a gap through which the layer will be processed. Preferably, said layer is introduced into said gap with an inline speed of at least 1 m/min, more preferably of at least 2 m/min, most preferably of at least 3 m/min. The transversal pressure to which the layer is subjected may be expressed in N/mm or N/mm$^2$ depending on the geometry of the compression means. In the case the compression means is a calender or a comparable compression means applying a compression to a narrow surface area, the line pressure is at least 100 N/mm, more preferably at least 200 N/mm, even more preferably at least 300 N/mm, most preferably at least 500 N/mm. In case the compression means is a press, i.e. applying a compression to a broad surface, the surface pressure is at least 1 N/mm$^2$, more preferably at least 5 N/mm$^2$, even more preferably at least 10 N/mm$^2$, most preferably at least 20 N/mm$^2$. It was observed that the higher the respective pressure, the higher the transversal strength of the fibrous tapes is. It is commonly known in the art that a calender comprises at least two counter-rotating calendering rolls which form a nip, e.g. where the rolls abut each other, by applying a, preferably constant, closing force on said rolls. The closing force is usually measured by a force gauge. The calendering line pressure can therefore be easily determined by dividing the closing force as measured by the force gauge to the width of the layer comprising the network of fibers. It is further commonly known in the art that a press comprises at least 2 counteracting compression surfaces by applying a, preferably constant, closing force on said compression surfaces and hence applying a pressure in N per mm$^2$ onto the material in between the at least 2 compression surfaces.

The compression step (f) of the process is carried out with a temperature $T_c$ of the compression means, wherein $T_c$ is below the temperature $T_p$ at which the layer comprising the polymer fibers is fed to the compression means. Preferably the temperature of the compression means is at least 3 K below $T_p$, preferably at least 5 K, more preferably at least 10 K, more preferably at least 20 K, even more preferably at least 30 K and most preferably at least 50 K below the $T_p$ of the layer. The inventors surprisingly found out, that by applying lower temperatures of the compression means may provide tapes with an optimized balance of mechanical properties. It was observed that operating the process according to the invention may provide fibrous tapes with optimized tenacity and transversal strength. The temperature of the compression means may be set by using internally heated or cooled compression means. Said temperature is influenced amongst others by the dimensions of the compression means (for example the diameter of the calendering rolls), the temperature ($T_p$) at which the layer is provided, the inline speed and optionally the temperature applied to the space beyond the compression means, such as a forced cooling of the produced fibrous tape exciting the compression means. By temperature of the compression means ($T_c$) is herein understood the temperature of the surface of the compression means in contact with the compressed layer. In case said surface temperature is different for different positions of the compression means, the $T_c$ is measured at the position where the fibrous tape is released from the compression means. In case the compression means is a calender, the calendering rolls preferably have a diameter of between 100 mm and 1000 mm, more preferably between 200 mm and 700 mm, most preferably between 300 mm and 600 mm.

In an optional embodiment the fibrous tape is stretched in step (g) at a draw rate of at most 1.1. Preferably the draw rate of the fibrous tape is at most 1.05, more preferably at most 1.03 and most preferably at most 1.01. It was surprisingly observed that such a limitation of the draw rate after the compression of the polymer fibers into a tape may provide a fibrous tape with further increased transversal strength.

The inventive process employs highly oriented polymer fibers. Such fibers may be fully drawn fibers, meaning that the fibers have been drawn as much as chosen for the manufacturing of the fiber product. Since a fiber manufacturer typically designs the product to have safety margin, a fully drawn fiber may be drawn further, though excessive further drawing typically will lead to fiber failure. A preferred embodiment of the inventive process is that the layer comprising the polymeric fibers are stretched in between the steps (a) and (f) to a total draw ratio from 1.02 to 3.0, preferably 1.03 to 2.0, more preferably 1.05 to 1.5 and most preferably 1.08 to 1.3. It was observed that these preferred ranges of drawing during the manufacture of the tape will optimize the balance of tape strength and transversal strength. While higher draw rates may result in increases of the tape tenacity, they may negatively affect the transversal strength. If too low draw rates are applied, both transversal strength and tenacity of the tape may be negatively affected.

In the mentioned step (h) here above, the fibrous tape is cooled such that the temperature of the tape is reduced with at least 25 °C, preferably the tapes are cooled to room temperature.

Accordingly, in a preferred embodiment of the process of the invention $T_p$ and $T_c$ are chosen to respect the conditions of $T_m > T_p \geq T_m$ - 15 K, and wherein $T_c \leq T_p$ - 15 K. In a further preferred embodiment $T_p$ and $T_c$ are chosen to respect the condition of $T_m > T_p \geq T_m$ - 5 K, and wherein $T_c \leq T_p$ - 30 K. It was observed that if the process of the invention is operated within the above boundaries, the obtained fibrous tapes have optimized balance of tenacity and transversal strength and will provide antiballistic articles with substantially reduced number of defects.

In a preferred process according to the invention the fibers comprise as a polymer UHMWPE, preferably the UHMWPE has an IV (measured at @135°C in decalin) of between 5 dL/g to 40 dL/g, more preferably between 8 and 30 dL/g and more preferably between 10 dL/g and 25 dL/g. It was observed that such ranges of intrinsic viscosities of UHMWPE provide further improved antiballistic performance of the therefrom manufactured fibrous tapes.

The process of the present invention furthermore enables tapes to be made that were never made available before, i.e. tapes with a unique combination of mechanical properties, i.e. a balance between ballistic properties and handling defects. More specifically the present invention enables fibrous tapes with a tenacity (TS) of at least 1.2 N/tex and a transversal strength ($S_{tr}$) of at least 0.5 MPa. In a preferred embodiment, the tenacity and the transversal strength of the tape respect the relation of formula 1;

$$S_{tr} = 2 \text{ MPa} - a * \rho * TS \qquad \text{Formula (1)}$$

wherein $S_{tr}$ is expressed in MPa, p is the density of the fibers in $g/mm^3$, TS is expressed in N/tex and the factor a is at most $6.5 \times 10^{-3}$, more preferably a is at most $5.0 \times 10^{-3}$, even more preferably a is at most $4.0 \times 10^{-3}$ and most preferably at most $3.0 \times 10^{-3}$. Surprisingly such tapes yield excellent performance when used in the manufacture of antiballistic products. Such high performance is unexpected in the field of antiballistic products.

The invention further relates to products such as sheets and antiballistic articles comprising the fibrous tapes of the invention. In particular, the invention relates to a sheet comprising at least two monolayers comprising fibrous tapes according to the invention or at least one layer of woven fibrous tapes according to the invention. Preferably the monolayers comprise unidirectional aligned fibrous tapes.

The sheets may also contain a binder in between the tapes forming said sheet. The purpose of the binder may be to hold said fibrous tapes in place in order to improve the ease of operation of the monolayers or sheets comprising thereof. Suitable binders are described in e.g. EP 0191306 B1, EP 1170925 A1, EP 0683374 B1 and EP 1144740 A1. It was observed that good results may be obtained when the sheets or the therefrom manufactured panel is substantially free of any binder or any other material the purpose of which being to hold the fibrous tapes together.

By a monolayer of unidirectional aligned fibrous tapes is herein understood that a majority of the fibrous tapes in the sheet, e.g. at least 70 mass% of the total mass of fibrous tapes in said monolayer, more preferably at least 90 mass%, most preferably about 100 mass%, run along a common direction. In a sheet comprising at least two monolayers, the direction of the fibrous tapes in a monolayer is at an angle $\alpha$ to the direction of a fibrous tape in an adjacent monolayer. In a layer of woven fibrous tapes comprising weft and warp woven tapes the directions of orientation of the weft and the warp woven fibrous tapes are at an angle $\beta$, whereby respectively $\alpha$ and $\beta$ are preferably between 20 and 90°, more preferably between 45 and 90° and most preferably between 75 and 90° most preferably the angles $\alpha$ and $\beta$ are about 90°.

In a preferred embodiment, the sheets of the invention are compacted by mechanical fusing of the fibrous tapes. Said mechanical fusing is preferably achieved under a combination of pressure, temperature and time which results in substantially no melt bonding. Preferably, there is no detectable melt bonding as detected by DSC (10 K/min). No detectable melt bonding means that no visible endothermic effect consistent with partially melt recrystallized fibers is detected, when the sample is analyzed in triplicate. It has been found that the application of high pressures at a temperature suitably below the melting point of the fiber results in no detectable amount of melt recrystallized fibers being present, which is consistent with the substantial absence of melt bonding.

Accordingly the invention also relates to compressed sheets comprising the fibrous tape of the invention. It was observed that said compressed sheet will have a more homogeneous appearance if compared to compressed sheets made from fibrous tapes known in the art. As presented above, the fibrous tapes known in the art are prone to longitudinal splitting upon handling. In sheets manufactured from said prior art fibrous tapes imperfections in the form of splits may be observed. The presence of splits in the tapes may result in local defects due to overlaps or gaps in the tape. Hence the invention also relates to sheets comprising the fibrous tape, wherein the split length in the tape is less than 5 $m/m^2$ of sheet, preferably less than 2 $m/m^2$ of sheet, even more preferably less than 1 $m/m^2$ of sheet, and most preferably less than 50 $cm/m^2$ of sheet. It was observed that such low split length in a sheet comprising the tape improves the antiballistic performance of articles made from said sheets.

The invention also relates to antiballistic articles comprising the sheet according to the invention. Preferably the antiballistic article comprising at least 2, preferably at least 4, more preferably at least 8 sheets. It was observed that antiballistic articles comprising such number of sheets have improved antiballistic properties when compare to sheets comprising the fibrous tapes known in the art.

In a preferred embodiment, the antiballistic article has an areal density between 0.25 $Kg/m^2$ and 250 $Kg/m^2$, preferably between 0.5 $Kg/m^2$ and 100 $Kg/m^2$, more preferably between 1 $Kg/m^2$ and 75 $kg/m^2$ and most preferably between 2 $Kg/m^2$ and 50 $Kg/m^2$.

In a yet preferred embodiment, the antiballistic article of the invention is a panel. By panel is understood herein that the individual sheets have been compressed, optionally under elevated temperature to form a single monolithic structure. Preferably, the panel of the invention is compressed at a temperature of below the $T_m$ of the polymeric fibers, more preferably at a temperature of between said $T_m$ and $T_m$ - 100 K and with a pressure of at least 100 bars, more preferably at least 150 bars, to obtain a panel.

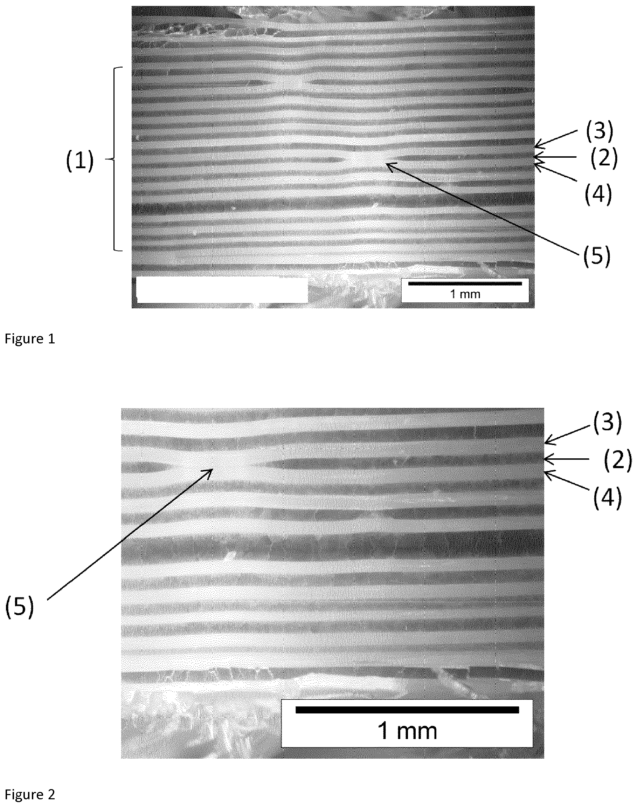

It was observed that the panels comprising the tapes according to the invention have increased structural homogeneity and hence provide a panel with less fluctuation in the antiballistic properties compared to panels comprising fibrous tapes known from the prior art. The inventors observed that tapes with splits may lead to local fiber and/or tape displacements by portions of adjacent tapes being squeezed under moulding conditions into said splits of the intermediate tape. Such migration of portions of tape result in reduced structural homogeneity of the antiballistic panel. Structural inhomogeneity can for example be observed by microscopy of a cross-section of a compacted panel whereby the cross-section is perpendicular to the common direction of unidirectional aligned fibrous tape. In such cross-section (Figure 1 and Figure 2) unidirectional aligned fibrous tapes may be observed as distinct, substantially parallel bands (1). A displacement due to a split tape of a monolayer (2) may appear as a location in said cross-section where the tapes of the 2 adjacent monolayers (3 and 4) originally separated by the tape of intermediate monolayer (2), contact each other (5). It is the purpose of the present invention to provide a panel with an increased structural homogeneity, i.e. with a reduced number of such tape contacts. The invention thus also relates to an antiballistic article comprising a number of contacts between 2 tapes separated by at least one intermediate tape, alternatively called separating tape, wherein the number of contacts is less than 20 per unit of width of 1 meter of intermediate tape, while a contact corresponds to a tape-to-tape interaction of two tapes separated by an intermediate tape, occurring through a split of the intermediate tape. Such contacts can easily be counted by the skilled person when analysing a cross-section of said panel as depicted in Figures 1 and Figure 2.

The invention further relates to an armor comprising the panel of the invention. Examples of armors include but are not limited to helmets, breast plates, vehicle hulls and vehicle doors.

The present invention further relates to a product for automotive applications such as car parts, etc.; marine applications such as ships, boats, panels, etc.; aerospace applications such as planes, helicopters, panels, etc.; defense/life-protection applications such as ballistic protection, body armor, ballistic vests, shields, ballistic helmets, ballistic vehicle protection, etc.; architectural applications such as windows, doors, walls, pseudowalls, cargo doors, cargo walls, radomes, shields, etc. wherein said product contains the tapes, the sheets or the panel of the invention.

Figure 1 and 2 show a light microscopy picture at 2 different scales showing a portion of a cross-section (1) through a panel comprising monolayers the fibrous tapes according to the invention. The monolayers of which the fibers run substantially in parallel to the cross section are of a lighter shade (3 and 4) than the monolayers of which the fibers run substantially perpendicular to the cross-section (2). The position (5) in the figures indicates a split of the tape of monolayer (2), which split has been filled with the tapes of the respective adjacent monolayers (3) and (4).

The invention will be further explained with the help of the following examples without however being limited thereto.

EXPERIMENTAL

Methods of Measuring

- Areal density (AD) of a panel or sheet was determined by measuring the weight of a sample of preferably 0.4 m x 0.4 m with an error of 0.1 g. The areal density of a tape was determined by measuring the weight of a sample of preferably 1.0 m x 0.03 m with an error of 0.1 g.
- Intrinsic Viscosity (IV) is determined according to ASTM-D1601/2004 at 135°C in decalin, the dissolution time being 16 hours, with DBPC as anti-oxidant in an amount of 2 g/l solution, by extrapolating the viscosity as measured at different concentrations to zero concentration. There are several empirical relations between IV and Mw, but such relation is highly dependent on molar mass distribution. Based on the equation $M_w = 5.37*10^4 [IV]^{1.37}$ (see EP 0504954 A1) an IV of 4.5 dl/g would be equivalent to a $M_w$ of about 422 kg/mol.
- Side chains in a polyethylene or UHMWPE sample is determined by FTIR on a 2 mm thick compression molded film by quantifying the absorption at 1375 $cm^{-1}$ using a calibration curve based on NMR measurements (as in e.g. EP 0 269 151)
- Tensile properties, i.e. strength and modulus, of fibers were determined on multifilament yarns as specified in ASTM D885M, using a nominal gauge length of the fibre of 500 mm, a crosshead speed of 50%/min and Instron 2714 clamps, of type Fibre Grip D5618C. For calculation of the strength, the tensile forces measured are divided by the titre, as determined by weighing 10 meter of fibre; values in GPa for are calculated assuming the natural density of the polymer (p), e.g. for UHMWPE is 0.97 $g/cm^3$.
  The tensile properties of tapes and films are determined accordingly on tapes of a width of 2 mm twisted 40 turns per meter.

- The transversal strength of tapes is measured on a Zwick Z005 tensile tester with a 1kN force cell and manual G13T and G13B tape clamps. The test samples are prepared by manually cutting the tapes to 250 mm strips. During preparation of the test samples care should be paid to avoid unintentional partial splitting of the tape. Samples which prove impossible to be cut into coherent 250 mm strips are assigned a transverse strength of 0 MPa. The clamping length of the samples is 60 mm and distance between clamps is 20 mm. Pre-load is 0.1 N, and test occurs at a speed of 50 mm/min. The maximum force determines the transversal strength. The strength in MPa is calculated by dividing that maximum force in Newton by the width and the thickness of the sample in mm. Thus a breaking stress in $N/mm^2$ is achieved, being identical to breaking stress in MPa. The average of 5 samples is reported.
- The melting temperature ($T_m$) of a filament is determined by DSC on a power-compensation PerkinElmer DSC-7 instrument which is calibrated with indium and tin with a heating rate of 10 K/min on a 5 mg sample. For calibration (two point temperature calibration) of the DSC-7 instrument about 5 mg of indium and about 5 mg of tin are used, both weighed in at least two decimal places. Indium is used for both temperature and heat flow calibration; tin is used for temperature calibration only.
- Ballistic performance was measured by subjecting the panels to shooting tests performed with the further indicated ammunition. The first shot was fired at a projectile speed ($V_{50}$) at which it is anticipated that 50% of the shots would be stopped. The actual bullet speed was measured at a short distance before impact. If a stop was obtained, the next shot was fired at an anticipated speed being 10% higher than the previous speed. If a perforation occurred, the next shot was fired at an anticipated speed 10% lower than the previous speed. The result for the experimentally obtained V50 value was the average of the two highest stops and the two lowest perforations. The kinetic energy of the bullet at $V_{50}$ ($E_{kin} = 1/2.m.V_{50}^2$) wherein m is the mass of the projectile, was divided by the areal density of the armor to obtain a so-called $E_{abs}$ value. $E_{abs}$ reflects the stopping power of the armor relative to its weight/thickness thereof. The higher the $E_{abs}$ the better the armor is.
- The speed of the projectile was measured with a pair of Drello Infrared (IR) light screen Type LS19i3 positioned perpendicular on the path of the projectile. At the instant when a projectile passes through the first light screen a first electric pulse will be produced due to the disturbance of the IR beam. A second electric pulse will be produced when the projectile passes through the second light screen. Recording the moments in time when the first and the second electric pulses occur, and knowing the distance between the light screed the speed of the projectile can be immediately determined.
- Tape-to-tape contacts in a panel are determined by light microscopy of polished cross-sections of a panel. The number of contacts is counted on a cross-section of at least 1 by 5 $mm^2$. The total width of cross-sectioned tape (in m) present in said cross-section of 1 by 5 $mm^2$ is calculated multiplying 0.005 m cross-section length by the number of visible cross-sectioned tape, i.e. by dividing the height by the tape thickness.

## General experimental setup

8 multifilament UHMWPE yarns were spread to form a homogeneous layer of filaments with a total thickness of about 50 micron and a width of approximately 3 cm. The filament layer was run through a set of two counter rotating calender rolls of a diameter of 40 cm and a width of 4 cm each. The temperature controlled rolls were set at a speed of 530 cm/min and applied a pressure of 1750 N/mm to the filament layer. A further roller stand placed after the calender rolls applied a tensile force of about 80 N to the tape exiting the nip of the calender rolls and optionally perform a post draw to the formed fibrous tape before being air cooled to a temperature below 80°C and wound on a bobbin.

### Comparative Experiment A

A multifilament UHMWPE yarn with a tenacity of 3.1 N/tex and a paraffinic solvent level of about 50 ppm was subjected to above general experimental setup. The calender rolls were heated to 161°C. The obtained fibrous tape A had an average thickness of 47.2 micrometer, a width of 28 mm, a titre of 957 dtex and a tenacity of 3.01 N/tex. The transversal strength of the tape was 0.39 MPa.

### Comparative Experiment B

Comparative Experiment A was repeated with the difference that a forced air convection oven at a temperature of 143°C in between two roller stands applying an tensile force to the filaments was placed before the calender rolls. The tensile force was adjusted to apply a draw rate of 1.12 to the filament layer before entering the calender rolls set at a temperature of 160°C. The obtained fibrous tape B had an average thickness of 47 micrometer, a width of 29 mm, a titre of 968 dtex and a tenacity of 2.83 N/tex. The transversal strength of the tape was 0.41 MPa.

Example 1

Comparative Experiment B was repeated with the addition that the drawn filament layer was passed over a heated surface of 157°C, the contact path with the heated surface having a length of about 3 cm before entering the calendering rolls set at a temperature of 139°C. The obtained fibrous tape 1 had an average thickness of 39.6 micrometer, a width of 30 mm, a titre of 751 dtex and a tenacity of 3.19 N/tex. The transversal strength of the tape was 0.60 MPa representing about a 50% improvement over the transversal strength of tape B.

## Claims

1. A fibrous tape made from fibers comprising highly oriented polymer, the tape having a tenacity of at least 1.2 N/tex and an areal density of between 5 and 250 g/m$^2$, wherein the tape has a transversal strength of at least 0.5 MPa.

2. The tape of claim 1, wherein the polymer is a polyolefin, preferably a polyethylene and more preferably a high or ultrahigh molecular weight polyethylene (UHMWPE).

3. The tape of claim 1 or 2 wherein the tape has a cross-sectional aspect ratio thickness to width of at most 1:50, preferably at most 1:100, more preferably at most 1:500.

4. The tape of any of the claims 1 to 3 wherein the tape has a tenacity of at least 1.5 N/tex, preferably at least 2.0 N/tex, more preferably at least 2.5 N/tex, even more preferably 3.0 N/tex and most preferably 3.5 N/tex.

5. The tape of any of the preceding claims wherein the transversal strength is at least 0.6 MPa, more preferably at least 0.7 MPa, even more preferably at least 0.8 MPa, and most preferably at least 0.9 MPa.

6. The tape of any of the preceding claims wherein the fibers comprising the polymer comprise at least 10 ppm of a solvent for the polymer.

7. A sheet comprising at least two monolayers comprising fibrous tape or at least one layer of woven fibrous tapes, wherein the fibrous tapes are selected from claims 1 to 6.

8. The sheet according to claim 7 wherein the direction of the fibrous tape in a monolayer is at an angle $\alpha$ to the direction of a fibrous tape in an adjacent monolayer or wherein the layer of woven fibrous tapes comprises weft and warp woven tapes and the direction of orientation of the weft and the warp woven tapes in the layer of woven fibrous tapes are at an angle $\beta$ and wherein $\alpha$ or $\beta$ are between 20 and 90°, more preferably between 45 and 90°, most preferably between 75 and 90°.

9. An antiballistic article comprising at least 2, preferably at least 4, more preferably at least 8 sheets according to claim 7 or 8.

10. The antiballistic article of claim 9 having an areal density between 0.25 Kg/m$^2$ and 250 Kg/m$^2$, preferably between 0.5 Kg/m$^2$ and 100 Kg/m$^2$, more preferably between 1 Kg/m$^2$ and 75 kg/m$^2$ and most preferably between 2 Kg/m$^2$ and 50 kg/m$^2$.

11. The antiballistic article of claims 9 or 10, comprising a number of contacts between two tapes separated by an intermediate tape, wherein the number of contacts is less than 20 per unit of width of 1 meter of the intermediate tape, while a contact corresponds to a tape-to-tape interaction of the two tapes separated by an intermediate tape, occurring through a split of the intermediate tape.

12. A process for the preparation of the fibrous tape of any of the claims 1 to 6, the process comprising:

    (a) providing fibers comprising a highly oriented polymer, said fibers having a tenacity of at least 1.2 N/tex
    (b) forming a layer comprising the fibers;
    (c) applying a longitudinal tensile force to the fibers in the layer,
    (d) stretching the fiber layer at a draw ratio of at least 1.01 to form a stretched layer;
    (e) providing the stretched layer at a processing temperature $T_p$ to compression means;
    (f) compressing the stretched layer of fibers by subjecting the layer to a compression by the compression means having a temperature $T_c$ to form a fibrous tape;
(g) optionally stretching the fibrous tape by a draw rate of at most 1.1 and,
(h) cooling the fibrous tape to a temperature of at most 80°C under a tension sufficient to prevent loss of mechanical properties;

wherein $T_m$ is the melting temperature of the polymer,
wherein $T_m > T_p \geq T_m$ - 30 K, and
wherein $T_c \leq T_p$ - 3 K.

13. The process according to claim 12,
wherein $T_m > T_p \geq T_m$ - 15 K, and
wherein $T_c \leq T_p$ - 15 K.

14. The process according to claims 12 or 13, wherein the polymer is UHMWPE, preferably the UHMWPE has an intrinsic viscosity of between 5 dL/g to 40 dL/g, more preferably between 8 and 30 dL/g.

15. The process of any of the claims 12 to 14 wherein the filaments are stretched in between the steps (a) and (f) to a draw ratio from 1.02 to 3.0, preferably 1.03 to 2.0.

**Patentansprüche**

1. Faserband, das aus Fasern gefertigt ist, die hochorientiertes Polymer umfassen, wobei das Band eine Festigkeit von mindestens 1,2 N/tex und eine Flächendichte zwischen 5 und 250 g/m$^2$ aufweist, wobei das Band eine Querfestigkeit von mindestens 0,5 MPa aufweist.

2. Band nach Anspruch 1, wobei das Polymer ein Polyolefin, vorzugsweise ein Polyethylen und bevorzugter ein ultrahochmolekularem Polyethylen (UHMWPE) ist.

3. Band nach Anspruch 1 oder 2, wobei das Band ein Aspektverhältnis im Querschnitt von Dicke zu Breite von höchstens 1:50, vorzugsweise höchstens 1:100, bevorzugter höchstens 1:500 aufweist.

4. Band nach einem der Ansprüche 1 bis 3, wobei das Band eine Festigkeit von mindestens 1,5 N/tex, vorzugsweise mindestens 2,0 N/tex, bevorzugter mindestens 2,5 N/tex, noch bevorzugter 3,0 N/tex und am bevorzugtesten 3,5 N/tex aufweist.

5. Band nach einem der vorhergehenden Ansprüche, wobei die Querfestigkeit mindestens 0,6 MPa, bevorzugter mindestens 0,7 MPa, noch bevorzugter mindestens 0,8 MPa und am bevorzugtesten mindestens 0,9 MPa beträgt.

6. Band nach einem der vorhergehenden Ansprüche, wobei die das Polymer umfassenden Fasern mindestens 10 ppm eines Lösungsmittels für das Polymer umfassen.

7. Folie, die mindestens zwei Einfachschichten mit Faserband oder mindestens eine Lage aus gewebten Faserbändern umfasst, wobei die Faserbänder aus Anspruch 1 bis 6 ausgewählt sind.

8. Folie nach Anspruch 7, wobei die Richtung des Faserbands in einer Einfachschicht einen Winkel $\alpha$ zur Richtung eines Faserbands in einer benachbarten Einfachschicht aufweist oder wobei die Lage aus gewebten Faserbändern als Kette und Schuss gewebte Bänder umfasst und die Richtung der Ausrichtung der als Kette und Schuss gewebten Bänder in der Lage aus gewebten Faserbändern einen Winkel $\beta$ aufweist und wobei $\alpha$ oder $\beta$ zwischen 20 und 90°, bevorzugter zwischen 45 und 90°, am bevorzugtesten zwischen 75 und 90° betragen.

9. Antiballistischer Artikel, der mindestens 2, vorzugsweise mindestens 4, bevorzugter mindestens 8 Folien nach Anspruch 7 oder 8 umfasst.

10. Antiballistischer Artikel nach Anspruch 9 mit einer Flächendichte zwischen 0,25 kg/m$^2$ und 250 kg/m$^2$, vorzugsweise zwischen 0,5 kg/m$^2$ und 100 kg/m$^2$, bevorzugter zwischen 1 kg/m$^2$ und 75 kg/m$^2$ und am bevorzugtesten zwischen 2 kg/m$^2$ und 50 kg/m$^2$.

**11.** Antiballistischer Artikel nach Anspruch 9 oder 10, der mehrere Kontakte zwischen zwei Bändern umfasst, die durch ein Zwischenband getrennt sind, wobei die Anzahl von Kontakten unter 20 pro Breiteneinheit von 1 Meter des Zwischenbands beträgt, während ein Kontakt einer Band-zu-Band-Wechselwirkung der beiden durch ein Zwischenband getrennten Bänder entspricht, die durch einen Schlitz des Zwischenbands hindurch erfolgt.

**12.** Verfahren zur Herstellung des Faserbands nach einem der Ansprüche 1 bis 6, wobei das Verfahren Folgendes umfasst:

(a) Bereitstellen von Fasern mit einem hochorientierten Polymer, wobei die Fasern eine Festigkeit von mindestens 1,2 N/tex aufweisen,
(b) Formen einer die Fasern umfassenden Lage;
(c) Ausüben einer Längszugkraft auf die Fasern in der Lage,
(d) Strecken der Faserlage bei einem Streckverhältnis von mindestens 1,01 zum Ausbilden einer gestreckten Lage;
(e) Bereitstellen der gestreckten Lage bei einer Verarbeitungstemperatur $T_p$ für Pressmittel;
(f) Pressen der gestreckten Faserlage, indem die Lage von den Pressmitteln mit einer Temperatur $T_c$ gepresst wird, damit ein Faserband ausgebildet wird;
(g) gegebenenfalls Strecken des Faserbands bei einem Streckverhältnis von höchstens 1,1 und
(h) Kühlen des Faserbands auf eine Temperatur von höchstens 80°C unter einer ausreichenden Spannung zum Verhindern eines Verlusts mechanischer Eigenschaften;

wobei $T_m$ die Schmelztemperatur des Polymers ist,
wobei $T_m > T_p \geq T_m$ - 30K, und
wobei $T_c \leq T_p$ - 3K.

**13.** Verfahren nach Anspruch 12,
wobei $T_m > T_p \geq T_m$ - 15K, und
wobei $T_c \leq T_p$ - 15K.

**14.** Verfahren nach Ansprüche 12 oder 13, wobei das Polymer UHMWPE ist, das UHMWPE vorzugsweise eine Eigenviskosität zwischen 5 dl/g und 40 dl/g, bevorzugter zwischen 8 und 30 dl/g aufweist.

**15.** Verfahren nach einem der Ansprüche 12 bis 14, wobei die Filamente zwischen den Schritten (a) und (f) auf ein Streckverhältnis zwischen 1,02 und 3,0, vorzugsweise 1,03 und 2,0 gestreckt werden.

## Revendications

**1.** Bande fibreuse fabriquée à partir de fibres comprenant un polymère hautement orienté, la bande ayant une ténacité d'au moins 1,2 N/Tex et une masse surfacique de 5 à 250 g/m², la bande ayant une résistance transversale d'au moins 0,5 MPa.

**2.** Bande selon la revendication 1, dans laquelle le polymère est une polyoléfine, préférablement un polyéthylène et plus préférablement un polyéthylène à haute ou ultra-haute masse moléculaire (UHMWPE).

**3.** Bande selon la revendication 1 ou 2, la bande ayant un rapport d'allongement de l'épaisseur contre la largeur de section transversale d'au maximum 1:50, préférablement d'au maximum 1:100, plus préférablement d'au maximum 1:500.

**4.** Bande selon l'une quelconque des revendications 1 à 3, la bande ayant une ténacité d'au moins 1,5 N/Tex, préférablement d'au moins 2,0 N/Tex, plus préférablement d'au moins 2,5 N/Tex, encore plus préférablement de 3,0 N/Tex, et idéalement de 3,5 N/Tex.

**5.** Bande selon l'une quelconque des revendications précédentes, dans laquelle la résistance transversale est d'au moins 0,6 MPa, plus préférablement d'au moins 0,7 MPa, encore plus préférablement d'au moins 0,8 MPa, et idéalement d'au moins 0,9 MPa.

**6.** Bande selon l'une quelconque des revendications précédentes, dans laquelle les fibres comprenant le polymère comprennent au moins 10 ppm d'un solvant pour le polymère.

7. Feuille comprenant au moins deux monocouches comprenant une bande fibreuse ou au moins une couche de bandes fibreuses tissées, les bandes fibreuses étant sélectionnées parmi les revendications 1 à 6.

8. Feuille selon la revendication 7, dans laquelle la direction de la bande fibreuse dans une monocouche est à un angle $\alpha$ par rapport à la direction d'une bande fibreuse dans une monocouche adjacente, ou dans laquelle la couche de bandes fibreuses tissées comprend des bandes tissées de trame et des bandes tissées de chaîne et les directions d'orientation des bandes tissées de trame et des bandes tissées de chaîne dans la couche de bandes fibreuses tissées sont à un angle $\beta$ et dans laquelle $\alpha$ ou $\beta$ sont de 20 à 90 °, plus préférablement de 45 à 90 °, idéalement de 75 à 90 °.

9. Article de protection balistique comprenant au moins 2, préférablement au moins 4, plus préférablement au moins 8 feuilles selon la revendication 7 ou 8.

10. Article de protection balistique selon la revendication 9, ayant une masse surfacique de 0,25 kg/m$^2$ à 250 kg/m$^2$, préférablement de 0,5 kg/m$^2$ à 100 kg/m$^2$, plus préférablement de 1 kg/m$^2$ à 75 kg/m$^2$, et idéalement de 2 kg/m$^2$ à 50 kg/m$^2$.

11. Article de protection balistique selon les revendications 9 ou 10, comprenant un nombre de contacts entre deux bandes séparées par une bande intermédiaire, le nombre de contacts étant inférieur à 20 par unité de largeur de 1 mètre de la bande intermédiaire, un contact correspondant à une interaction bande-bande des deux bandes séparées par une bande intermédiaire, se produisant à travers une fente de la bande intermédiaire.

12. Procédé de fabrication de la bande fibreuse selon l'une quelconque des revendications 1 à 6, le procédé comprenant :

(a) la fourniture de fibres comprenant un polymère hautement orienté, lesdites fibres ayant une ténacité d'au moins 1,2 N/Tex ;
(b) la formation d'une couche comprenant les fibres ;
(c) l'application d'une force de traction longitudinale aux fibres dans la couche,
(d) l'étirage de la couche de fibres selon un rapport d'étirage d'au moins 1,01 pour former une couche étirée ;
(e) la présentation de la couche étirée à une température de transformation $T_p$ à un moyen de compression ;
(f) la compression de la couche de fibres étirée en soumettant la couche à une compression par le moyen de compression ayant une température $T_c$ pour former une bande fibreuse ;
(g) optionnellement l'étirage de la bande fibreuse selon un rapport d'étirage d'au maximum 1,1; et
(h) le refroidissement de la bande fibreuse jusqu'à une température d'au maximum 80 °C sous une tension suffisante pour éviter la perte de propriétés mécaniques ;

dans lequel $T_m$ est la température de fusion du polymère,
dans lequel $T_m > T_p \geq T_m$ - 30 K, et
dans lequel $T_c < T_p$ - 3 K.

13. Procédé selon la revendication 12,
dans lequel $T_m > T_p > T_m$ - 15 K, et
dans lequel $T_c < T_p$ - 15 K.

14. Procédé selon la revendication 12 ou 13, dans lequel le polymère est de l'UHMWPE, l'UHMWPE ayant préférablement une viscosité intrinsèque de 5 dl/g à 40 dl/g, plus préférablement de 8 dl/g à 30 dl/g.

15. Procédé selon l'une quelconque des revendications 12 à 14, dans lequel les filaments sont étirés entre les étapes (a) et (f) selon un rapport d'étirage de 1,02 à 3,0, préférablement de 1,03 à 2,0.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013131996 A
- WO 2012080274 A
- WO 2013130160 A
- US 4384016 A
- EP 1350868 A
- US 4413110 A
- GB 2042414 A
- GB 2051667 A
- WO 0173173 A1
- WO 2009056286 A
- WO 9112136 A1
- WO 20090056286 A
- EP 0191306 B1
- EP 1170925 A1
- EP 0683374 B1
- EP 1144740 A1
- EP 0504954 A1
- EP 0269151 A

**Non-patent literature cited in the description**

- **J. BRANDRUP ; E.H. IMMERGUT.** Polymer Handbook. 379-402